# EUROPEAN PATENT SPECIFICATION

(11) **EP 4 257 011 B1**
(45) Date of publication and mention of the grant of the patent: **29.04.2026**
(21) Application number: 22905468.9
(22) Date of filing: 22.02.2022
(51) Int. Cl.: A47B 97/04, F16M 11/26

(54) **BRACKET FOR A CONFERENCE WHITEBOARD OR DISPLAY**
BÜGEL FÜR EIN KONFERENZ-WHITEBOARD ODER EINE ANZEIGE
SUPPORT POUR TABLEAU DE CONFÉRENCE OU AFFICHAGE

(43) Date of publication of application: 11.10.2023
(73) Proprietor: BOE Technology Group Co., Ltd., Beijing 100015 (CN)
(72) Inventor: WU, Yunpeng, Beijing 100176 (CN); CAO, Lei, Beijing 100176 (CN); SUO, Ruirui, Beijing 100176 (CN); XIANG, Yongjie, Beijing 100176 (CN); SUN, Junmin, Beijing 100176 (CN); WANG, Wenbin, Beijing 100176 (CN); LI, Zhaowei, Beijing 100176 (CN); WANG, Qiang, Beijing 100176 (CN); YANG, Jinchao, Beijing 100176 (CN); REN, Yan, Beijing 100176 (CN); WANG, Zifeng, Beijing 100176 (CN)
(74) Representative: Studio Torta S.p.A.
(86) International application number: PCT/CN2022/077336
(87) International publication number: WO 2023/159361

(56) References cited:
- CN-A- 107 676 603
- CN-A- 112 145 924
- CN-U- 210 153 458
- CN-U- 210 153 478
- CN-U- 214 405 249
- CN-U- 214 855 519
- US-A1- 2013 134 280
- US-A1- 2017 238 699

## Description

### TECHNICAL FIELD

The present application generally relates to a bracket, particularly to a bracket for a conference whiteboard or display.

### BACKGROUND

The conventional TV bracket and conference tablet bracket are both static brackets. In recent years, there have been scalable or rotatable single-degree-of-freedom brackets on the market. Such a single-degree-of-freedom bracket has a scalable or rotatable mechanism, which can achieve single-degree-of-freedom scaling or rotation of the bracket under the driving of an electric motor. However, the range of movement of this single-degree-of-freedom bracket is limited and cannot provide users with good user experience. In addition, there are also two-degree-of-freedom (both scalable and rotatable) brackets in the relevant technical field. However, currently, the scalable and rotational mechanisms of two-degree-of-freedom brackets on the market can only be operated in sequence (such as first retracted and then rotated, or first rotated and then retracted), and cannot be synchronously retracted and rotated (i.e. rotated while retracted or retracted while rotated), resulting in low control efficiency and poor user experience.

CN107676603A provides a display support with an overturning structure. The display support can solve the problem that an existing display support cannot achieve large-range pitching angle adjustment of a display. The display support comprises a bottom plate, a display installing unit used for fixing a display, and an overturning drive unit used for adjusting the pitching angle of the display installing unit. The bottom plate is provided with two parallel stand columns. The display installing unit is hinged and connected to the tops of the two stand columns. The overturning drive unit drives the display installing unit to rotate in the vertical plane with the hinged points where the display installing unit and the tops of the two stand columns are hinged and connected as the rotation pivots, and pitching angle adjustment of the display installing unit is achieved. According to the display unit, the pitching angle of the display can be conveniently adjusted, a display screen is parallel and consistent to the visual angle, and the beneficial effects that the structure is simple, and usage is convenient are achieved.

US2017/238699 relates to a furniture piece having a worksurface and a support frame with first and second ends. At least two legs extend downwardly from each of the first and second ends for supporting the furniture piece on a floor surface. A linkage couples the support frame to the worksurface. The linkage is configured so that the worksurface can be moved between a first position in which the worksurface is substantially parallel to a horizontal plane defined by the support frame and a second position in which the worksurface is above and at an angle to the horizontal plane.

CN210153478U discloses an electric lifting turnover support. The electric lifting turnover support comprises a base. The lifting assembly comprises at least one lifting stand column and a driving mechanism for driving the lifting stand column to ascend and descend, and the lower end of the lifting stand column is connected with the base; the mounting frame assembly is used for mounting a plate or a display; the bottom of the mounting frame assembly is hinged to the outer side wall of the upper end of the lifting stand column and synchronously ascends and descends along with the lifting stand column. The lower end of the pull rod assembly is hinged with the base or the fixed pipe of the lifting upright, and the upper end is hinged with the mounting frame assembly; when the lifting stand column is in a rising unfolding state, the pull rod assembly drives the installation frame assembly to turn over from the horizontal direction to the vertical direction. When the lifting stand column is in a descending folding state, the pull rod assembly drives the mounting frame assembly to turn over from the vertical direction to the horizontal direction. The electric lifting turnover supports simple in structure, diverse in function, convenient to install, small in packaging size and good in user experience.

### SUMMARY

In order to solve the existing technical problem that two-degree-of-freedom brackets can only be operated in sequence and cannot be synchronously retracted and rotated, the present disclosure provides a bracket according to claim 1 that can be synchronously retracted and rotated.

A bracket according to the present invention comprises a base, a working panel, at least one first motion mechanism and at least one second motion mechanism. The working panel is supported by the base and is configured to be suitable for supporting an object to be supported. The at least one first motion mechanism is connected between the working panel and the base and comprises a first member connected to the working panel, the first member being configured to be movable in a first direction. The at least one second motion mechanism comprises a first end connected to the working panel and a second end connected to the base, the second motion mechanism being configured to enable the first end to perform relative motion relative to the second end, the relative motion comprising motion in a second direction different from the first direction.

The bracket provided according to the invention includes the following beneficial effects: since the bracket comprises at least one first motion mechanism and at least one second motion mechanism, wherein the at least one first motion mechanism is connected between the working panel and the base and comprises a first member connected to the working panel, the first member is configured to be movable in a first direction, the at least one second motion mechanism comprises a first end connected to the working panel and a second end connected to the base, the second motion mechanism is configured to enable the first end to perform relative motion relative to the second end, the relative motion comprising motion in a second direction different from the first direction, the bracket can be synchronously retracted and rotated, resulting in high control efficiency and good user experience.

In some embodiments, the second motion mechanism is configured so that the first end is movably connected to the working panel and the second end is movably connected to the base.

According to the invention, the first member comprises a first end connected to the working panel, the first end of the second motion mechanism being below the first end of the first member.

In some embodiments, the second motion mechanism comprises a telescopic mechanism.

In some embodiments, the second motion mechanism comprises a connecting rod.

According to the invention, the first motion mechanism further comprises a second member fixedly connected to the base. The first member is configured to be telescopic relative to the second member.

In some embodiments, the working panel comprises a front surface and a back surface, the front surface being configured to be suitable for arranging an object to be supported. The first end of the first member is hinged with the back surface. The second end of the first member is retractably engaged with the second member. The first end of the second member is retractably engaged with the first member. The second end of the second member is fixed to the base.

According to the invention, the first end of the second motion mechanism is pivotably connected to a lower end of the working panel, and the second end of the second motion mechanism is hinged to the base.

According to the invention, the bracket is configured such that: during the process of the first member extending from the second member, the working panel moves upwards, so that the first end of the second motion mechanism pivots around the second end of the second motion mechanism towards the second member.

The bracket is configured such that: during the process of the first member retracting back to the second member, the working panel moves downwards, so that the first end of the second motion mechanism pivots around the second end of the second motion mechanism in a direction away from the second member.

In some embodiments, the working panel is provided with a handle. A user of the bracket pulls the handle to drive the first member of the at least one first motion mechanism to be scalable relative to the second member.

In some embodiments, the bracket further comprises at least one first motion mechanism actuator configured to actuate the first member of the at least one first motion mechanism to be telescopic relative to the second member.

In some embodiments, the bracket further comprises a second motion mechanism actuator configured to cause the second motion mechanism to be pivotable around a pivot located at the second end of the second motion mechanism.

In some embodiments, the at least one first motion mechanism comprises a middle motion mechanism which is arranged adjacent to the middle of the back surface and the base, and the at least one first motion mechanism actuator comprises a middle motion mechanism actuator to actuate the first member of the middle motion mechanism to be scalable relative to the second member.

In some embodiments, the at least one first motion mechanism further comprises two side motion mechanisms which are respectively arranged on both sides of the middle motion mechanism opposite to each other. The first member of each of the two side motion mechanisms is configured to slide along the second member thereof.

In some embodiments, the at least one first motion mechanism comprises two side motion mechanisms, and the at least one first motion mechanism actuator comprises two side motion mechanism actuators to respectively actuate the first members of the two side motion mechanisms to be retracted relative to the second members.

In some embodiments, the at least one first motion mechanism comprises three motion mechanisms. The middle motion mechanism is arranged adjacent to the middle of the back surface and the base. The two side motion mechanisms are respectively arranged on both sides of the middle motion mechanism opposite to each other. The at least one first motion mechanism actuator comprises two side motion mechanism actuators to respectively actuate the first members of the two side motion mechanisms to retract relative to the second members, and the first member of the middle motion mechanism is configured to be slidable longitudinally along the second member.

In some embodiments, a scaling direction of the at least one first motion mechanism is a vertical direction. A motion of the working panel is a composite motion of the following two motions: motion along the vertical direction; and rotation around a hinge position.

**In** some embodiments, the first ends of the first members of the three motion mechanisms are collinear with the hinge positions hinged with the back surface of the working panel.

When the second motion mechanism comprises a connecting rod, the connecting rod is in a curved shape, which protrudes in a direction away from the working panel.

In some embodiments, the base comprises a decorative plate located behind the lower part of the working panel, on which a cutting groove is provided for the connecting rod to pass through without interference with the decorative plate.

In some embodiments, the base comprises a fixed frame located behind the working panel, which includes a first fixed plate and a second fixed plate. The two ends of the second member are respectively fixed to the first fixed plate and the second fixed plate.

In some embodiments, the second member is a sliding rail, and the first member is configured to be slidable on the sliding rail.

In some embodiments, each of the at least one first motion mechanism actuators is one of: a motor driving device; a hydraulic driving device; a pneumatic driving device; a cam driving mechanism; a gear-rack driving mechanism.

In some embodiments, the bracket further comprises a rear cover covering the at least one first motion mechanism actuator and at least a part of the at least one first motion mechanism.

In some embodiments, the at least one first motion mechanism comprises a metal material.

In some embodiments, the object to be supported is a conference whiteboard or display.

In some embodiments, a bottom of the base further comprises a plurality of rollers, of which at least one roller is provided with a braking device.

In some embodiments, the middle motion mechanism is an active driving mechanism, and is one of: a hydraulic ejector mechanism, a pneumatic ejector mechanism, a motor driving ejector mechanism, a cam driving ejector mechanism; a gear-rack driving ejector mechanism.

In some embodiments, the two side motion mechanisms are slave sliding mechanisms.

In some embodiments, the handle comprises a push-and-pull handle.

In some embodiments, the curved shape comprises a V-shape.

### BRIEF DESCRIPTION OF THE DRAWINGS

By reading the detailed description of the non-restrictive embodiments of the present disclosure with reference to the accompanying drawings, other features, objectives, and advantages of the present application will become more apparent.
Fig. 1 is a schematic rear view of a bracket provided by some exemplary embodiments of the present application.
Fig. 2 is a schematic rear view of another bracket provided by some exemplary embodiments of the present application.
Fig. 3 is a schematic side view of a bracket provided in some exemplary embodiments of the present application, wherein the working panel of the bracket is at a first extreme position (the lowest position).
Fig. 4 is a schematic side view of a bracket provided in some exemplary embodiments of the present application, wherein the working panel of the bracket is located at a working position between a first extreme position and a second extreme position (the highest position).
Fig. 5 is a schematic side view of a bracket provided in some exemplary embodiments of the present application, wherein the working panel of the bracket is at the second extreme position.
Fig. 6 schematically illustrates the equivalent mechanical schematic diagram of a motion mechanism of the bracket provided in some exemplary embodiments of the present application.
Fig. 7 is a schematic explosive view of a bracket provided by some exemplary embodiments of the present application. All components in the leftmost frame structure in the figure, except for the working panel 3, are collectively referred to as the base, which is the foundation of the entire bracket.
Fig. 8 schematically illustrates an application scenario of the bracket provided by some exemplary embodiments of the present application, wherein the working panel of the bracket is at the first extreme position.
Fig. 9 schematically illustrates another application scenario of the bracket provided by some exemplary embodiments of the present application, wherein the working panel of the bracket is at the second extreme position.
Figs. 10A to 10C schematically illustrate the positional relationship between the connecting rod and the cutting groove on the decorative plate in the bracket provided in some exemplary embodiments of the present application.
Fig. 11 is a schematic stereoscopic view of the bracket provided in some exemplary embodiments of the present application.

### DETAILED DESCRIPTION OF THE DISCLOSURE

Next, the present invention will be further explained in detail in conjunction with the accompanying drawings and embodiments. It can be understood that the specific embodiments described here are only intended to clarify this disclosure rather than limiting the protection scope of the present disclosure. It should also be noted that for the convenience of description, only the parts related to the present disclosure are shown in the accompanying drawings.

It should be noted that in the absence of conflicts, the embodiments and the features in the embodiments in this application can be combined with each other. The present application will be explained in detail with reference to the accompanying drawings and embodiments.

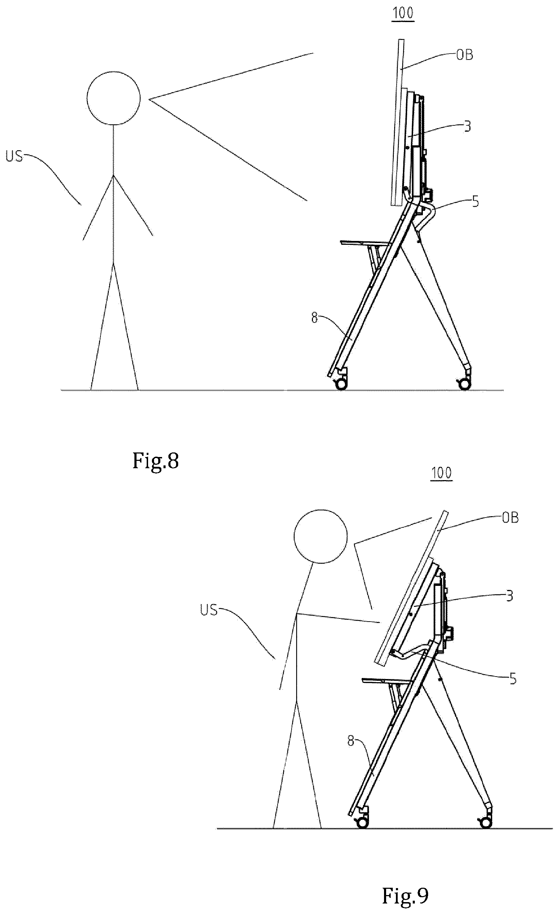

It should be noted that the directional terms "up, down, front, rear (back), horizontal, and vertical" in the present disclosure are all relative concepts rather than absolute concepts. If the absolute position of the described object changes, the relative position relationship may also change accordingly. For the sake of convenience and conciseness in the description, this application uses the usual working position of the bracket as a reference, that is, the side of the bracket 100 facing the user US in Figs. 8 and 9 is referred to as the front side; the side of the bracket 100 in Figs. 8 and 9 facing away from the user US is referred to as the rear or back side; the side of bracket 100 at which the roller 81 is located is called the lower side; the side of bracket 100 at which the working panel 3 is located is called the upper side.

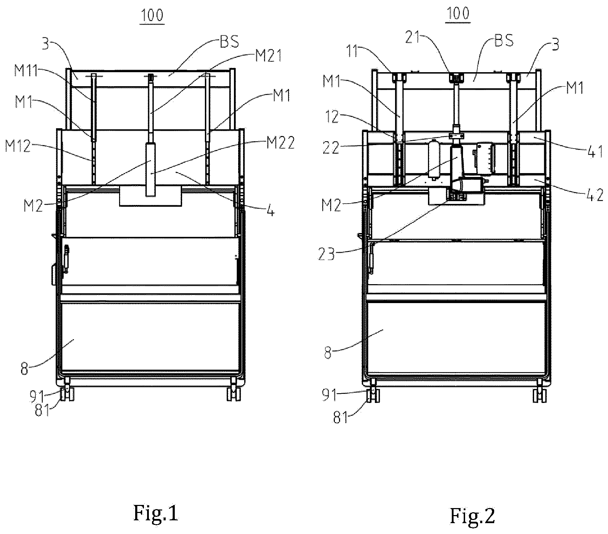

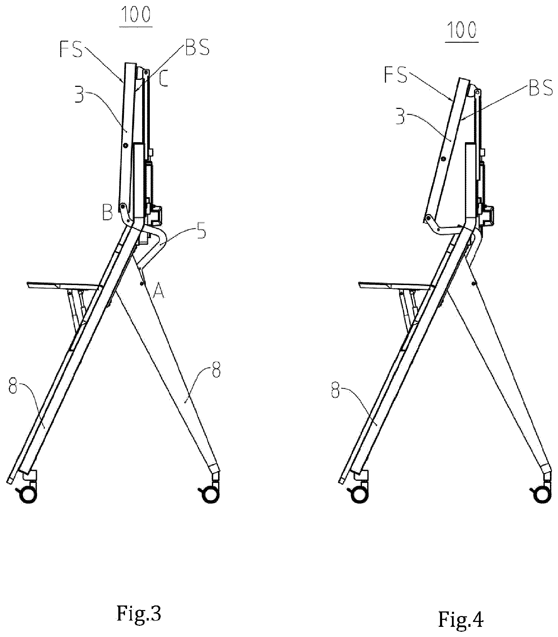

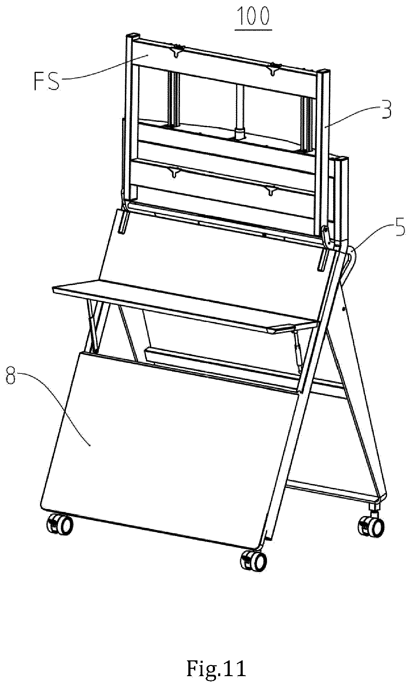

Referring to Figs. 1-11, according to the invention, the bracket 100 comprises: a base 8, a working panel 3, at least one first motion mechanism M1, M2, and a second motion mechanism. The working panel 3 is supported by the base 8. The at least one first motion mechanism M1, M2 is connected between the working panel 3 and the base 8 and is configured to move in a first direction (e.g., the vertical direction in Figs. 3-5). The second motion mechanism comprises a first end B connected to the working panel 3 and a second end A connected to the base 8. The second motion mechanism is configured to enable the first end B to perform relative motion relative to the second end A. The relative motion comprises motion in a second direction different from the first direction (e.g., the horizontal direction in Figs. 3-5).

The second motion mechanism can be in the form of a connecting rod or a telescopic component, as long as it can be actuated by a corresponding actuator to move in the second direction. For the sake of brevity, the connecting rod used as the second motion mechanism will be described in detail in the following.

The working panel 3 comprises a front surface FS and a back surface BS. The front surface FS is configured to be suitable for arranging an object to be supported OB. When the object to be supported OB is a display device, optionally, the working panel 3 can comprise a back cover of the display device so as to cover or support the display device. The at least one first motion mechanism M1, M2 is hinged on the back surface BS, and each first motion mechanism M1, M2 comprises a first member M11, M21 and a second member M12, M22. The first member M11, M21 is configured to be scalable relative to the second member M12, M22. The second member M12, M22 is fixedly connected to the base 8. The connecting rod 5 is located below the at least one first motion mechanism M1, M2. The first end B of the connecting rod 5 can be movably connected to the working panel 3 below the hinge position C between the first member M11, M21 and the back surface BS. The second end A of the connecting rod 5 is movably connected to the base 8 below the at least one first motion mechanism M1, M2. The object to be supported OB can be arranged on the front surface FS of the working panel 3 by hanging above or supporting at the bottom. The hanging forms include but are not limited to traditional wall hanging structures such as hanging nails and hanging strips.

As shown in Fig. 1, as an example, the bracket 100 comprises three first motion mechanisms (i.e. two side motion mechanisms M1 on both sides of the bracket 100 and one middle motion mechanism M2 in the middle of the bracket 100) (Of course, it can be understood that the bracket 100 can only comprise one first motion mechanism (such as a middle motion mechanism), or only two motion mechanisms (such as two side motion mechanisms)).The first end (the upper end in Fig. 1) of the first member M11 of each side motion mechanism M1 is hinged to the back surface BS of the working panel 3 through the hinge mechanism 11. The second end (the lower end in Fig. 1) of the first member M11 of each side motion mechanism M1 can be movably engaged with the second member M12 of the side motion mechanism M1. The first end (the upper end in Fig. 1) of the second member M12 of each side motion mechanism M1 can be movably engaged with the first member M11 of the side motion mechanism M1. The second end (the lower end in Fig. 1) of the second member M12 of each side motion mechanism M1 is fixed to the base 8. The first end (the upper end in Fig. 1) of the first member M21 of the middle motion mechanism M2 located in the middle is hinged with the back surface BS of the working panel 3 through the hinge mechanism 21. The second end (the lower end in Fig. 1) of the first member M21 of the middle motion mechanism M2 can be movably engaged with the second member M22 of the milled motion mechanism M2. The first end (the upper end in Fig. 1) of the second member M22 of the middle motion mechanism M2 can be movably engaged with the first member M21 of the middle motion mechanism M2. The second end (the lower end in Fig. 1) of the second member M22 of the middle motion mechanism M2 is fixed to the base 8. Optionally, the rotation axes of the hinge of the side motion mechanism M1 and the middle motion mechanism M2 are coaxial, both on the axis passing through the hinge point C (see Fig. 3). In other words, the first ends of the first members M11, M21 of the three first motion mechanisms M1, M2 are collinear with the hinge position hinged to the back surface BS of the working panel 3.

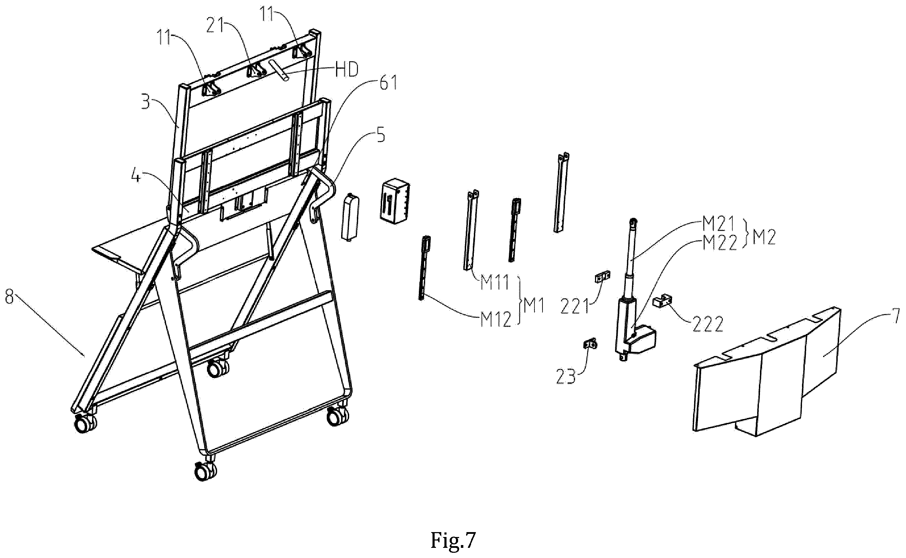

In some embodiments, the first motion mechanism M1, M2 can be a sliding mechanism. Referring to Fig. 7, the first member M11 of the side motion mechanism M1 and the first member M21 of the middle motion mechanism M2 can be respectively configured in the form of a sliding groove. Correspondingly, the second member M12 of the side motion mechanism M1 and the second member M22 of the middle motion mechanism M2 can be respectively configured as sliding rails, and the sliding groove can slide on the sliding rail. Of course, the positions of the sliding groove and the sliding rail can be interchanged, that is, the first members M11 and M21 can also be configured in the form of a sliding rail, and the second members M12 and M22 can be correspondingly configured in the corresponding sliding groove form. The side motion mechanism M1 and the middle motion mechanism M2 comprise metal materials, but other materials such as hard plastic can also be used, as long as they can meet the strength and stiffness requirements for supporting the working panel 3 and the object to be supported OB.

In addition, as shown in Fig. 2, the first members M11 and M21 can be guided by a guide member (such as a guide groove) 12 fixed to the base 8, so as to make the motion of the first members M11 and M21 smoother and avoid excessive left and right shaking, thereby improving the motion stability of the side motion mechanism M1 and the middle motion mechanism M2. Furthermore, the two ends of the second member M22 of the middle motion mechanism M2 can be fixed to the base 8 through a first fixing member 22 and a second fixing member 23, respectively. For example, as shown in Fig. 7, the upper end of the second member M22 of the middle motion mechanism M2 can be fixed to the base 8 in a snap-fit manner through a pair of snap elements 221, 222, thereby improving the support stability of the second member M22 of the middle motion mechanism M2.

As a variant, the first members M11 and M21 can also be supporting rods with sliders fixed at one end, the second members M12 and M22 can be sliding rails that are matched with the sliders, and the sliders can slide on the sliding rails. Similarly, the positions of the sliders and the sliding rail can be interchanged, that is, the second members M12 and M22 can also be configured as supporting rods with sliders fixed at one end, and the first members M11 and M21 can be correspondingly configured in the form of sliding rails.

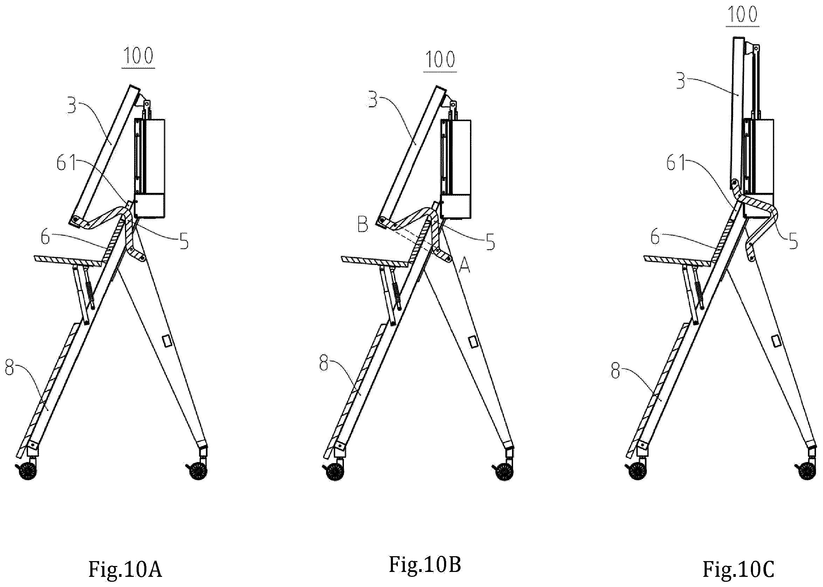

Please refer to Fig. 7 and Figs. 10A, 10B, and 10C together. All components in the leftmost frame structure in Fig. 7, except for the working panel 3, are collectively referred to as the base 8, which is the foundation of the entire bracket. The base 8 comprises a decorative plate 6 located behind the lower part of the working panel 3. The decorative plate 6 is provided with a cutting groove 61 to avoid the travel of the connecting rod 5, that is, for the connecting rod 5 to pass through without interference with the decorative plate 6. The base 8 further comprises a fixed frame 4 located behind the working panel 3, and the fixed frame 4 includes a first fixed plate 41 and a second fixed plate 42. The first fixed plate 41 is provided with the guide member 12 to guide the first member M11, M21. The two ends of the second member M12, M22 are respectively fixed to the first fixed plate 41 and the second fixed plate 42. The bottom of the base 8 may comprise a plurality of rollers 81 for the convenience of moving the bracket 100. At least one roller is provided with a braking device 91 for braking the bracket 100.

The connecting rod 5 is in a curved shape, such as a crank shape or a V-shape. The curved shape protrudes in a direction away from the working panel. As shown in Fig. 3, the curved shape protrudes in a direction away from the working panel 3 (i.e. protruding towards the back side). Of course, the connecting rod 5 can also take on other curved shapes such as U-shaped or C-shaped, which is not limited herein, as long as it can pass through the cutting groove 61 of the decorative plate 6 without interference with the decorative plate 6 during its motion. The design of the V-shaped connecting rod can play an effective avoidance role, so as not to cut off too much of the decorative plate when setting the avoidance slot. The first end B of the connecting rod 5 can be pivotably connected to the lower end of the working panel 3, and the second end A of the connecting rod 5 is hinged to the base 8.

During the operation of bracket 100, the first members M11 and M21 can extend or retract from the second members M12 and M22. During the process of extending the first members M11 and M21 from the second members M12 and M22, the first members M11 and M21 drive the working panel 3 to move upwards, and the working panel 3 drives the first end B of the connecting rod 5 to pivot around the second end A of the connecting rod 5 towards the second members M12 and M22. During the process of retracting the first members M11 and M21 back to the second members M12 and M22, the first members M11 and M21 drive the working panel 3 to move downwards, and the working panel 3 drives the first end B of the connecting rod 5 to pivot around the second end A of the connecting rod 5 in a direction away from the second members M12 and M22.

The scaling direction of the first motion mechanism M1, M2 is a vertical direction. The motion of the working panel 3 is a composite motion of the following two motions: movement along the vertical direction; and rotation around a hinge position C. The scaling distance of the first member M11, M21 relative to the second member M12, M22 is less than the longitudinal length of the first member M11, M21, preferably less than 90% of the longitudinal length of the first member M11, M21, and most preferably less than 80% of the longitudinal length of the first member M11, M21.

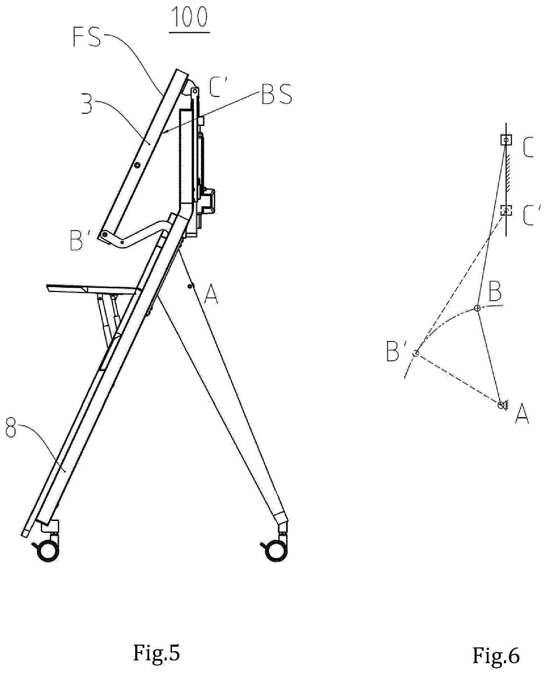

The equivalent mechanical motion principle of the connecting rod 5 is shown in Fig. 6. The equivalent structure of the connecting rod 5 is a rigid straight connecting rod between two points A and B. In an embodiment not according to the invention, when the bracket 100 does not have a front decorative plate 6 or other structures that interfere with it, the connecting rod 5 can be directly made into a straight rigid component connected by two points A and B.

Hereinafter, a brief explanation of the equivalent mechanical motion principle of the connecting rod 5 is given, taking the middle motion mechanism M2 in Fig. 1 as an example. The motion trajectory of the hinge position C of the first member M21 of the middle motion mechanism M2 is up and down movement in the vertical direction, which moves up and down with the scaling of the first member M21 of the middle motion mechanism M2. The travel is the same as that of the electric push rod, denoted as S. The extreme position shown in Fig. 3 is the state of the middle motion mechanism M2 when it reaches its maximum extension, i.e. Smax, at this time, the working panel 3 is in a vertical state, and the object to be supported OB hanging directly in front of it is also in a vertical state. Fig. 4 shows that the motion trajectory is in a certain state in the middle, where point C moves vertically downwards, while point B rotates forward around point A (fixed point) as the center of the circle, driving the working panel 3 (i.e., equivalent BC segment) to move downwards and tilt. Fig. 5 shows the state when the middle motion mechanism M2 retracts to the shortest, that is S=0, at this time, the working panel 3 is in the lowest state, and the screen hanging in front is also in the maximum tilted state.

The actuation mode for extending or retracting the first member M11 and M21 from the second member M12 and M22 can include any one of the following three modes: pure manual actuation or manual operation, pure electric actuation, and a combination of manual and electric actuation. A detailed explanation of these three modes will be given hereinafter.

In emergency situations such as power outages, pure manual actuation or manual operation can be used. For bracket 100 that uses pure manual actuation or manual operation, as shown in Fig. 7, the working panel 3 can be provided with a handle HD, which can include a push-and-pull handle, for example. The user US of the bracket 100 can pull the handle HD to drive the first members M11, M21 of the side and middle motion mechanisms M1, M2 to make them scalable relative to the second members M12 and M22. The first members M11, M21 then drive the working panel 3 to move up and down, and the working panel 3 then drives the first end B of the connecting rod 5 to pivot around the second end A of the connecting rod 5.

In general, the bracket 100 adopts a pure electric operation mode. In this case, the bracket 100 also comprises at least one first motion mechanism actuator (not shown in the figure), which is configured to actuate at least one first member M11, M21 in the first motion mechanism M1, M2 to make it scalable relative to the second component M12, M22. Each first motion mechanism actuator is, for example, one of the following items: a motor driving device (such as an ejector mechanism driven by a linear motor); a hydraulic driving device (such as a hydraulic ejector mechanism); a pneumatic driving device (such as a pneumatic ejector mechanism); a cam driving mechanism (such as a cam driving ejector mechanism); a gear-rack driving mechanism (such as a gear-rack driving ejector mechanism). For example, when using a first motion mechanism actuator in the form of a motor driving device, on the one hand, a linear motor can be used, which directly drives the first members M11 and M21 to make them scalable relative to the second member M12 and M22; on the other hand, traditional rotary motors can also be used, and the first members M11 and M21 can be indirectly driven to be scalable relative to the second members M12 and M22 through conversion of multi-level gear transformation mechanisms and/or gear-rack mechanisms. In addition, optionally or additionally, the bracket 100 further comprises at least one connecting rod actuator (not shown in the figure) configured to drive the connecting rod 5 to pivot around a pivot located at the second end A of the connecting rod 5. Each connecting rod actuator, for example, is a rotary motor driving device or a cam driving mechanism. Considering that the actuation modes of the first motion mechanism actuator and the connecting rod actuator listed above are typical technologies in relevant fields, there will be no elaboration on them here. In addition, when the second driving mechanism adopts the form of a scalable component, its actuation or driving mode is roughly the same as that of the first driving mechanism, and it will not be repeated here.

As the third actuation mode, a combination of manual and electric modes can also be adopted to extend or retract the first member M11, M21 from the second member M12, M22.

In Fig. 1 and Fig. 2, for example, the bracket 100 comprises three first motion mechanisms M1, M2. It should be understood that the bracket 100 can also be configured to comprise only one first motion mechanism, such as only one middle motion mechanism M2; or configured to comprise only two motion mechanisms, such as only two side motion mechanisms M1.

When the at least one first motion mechanism only includes one first motion mechanism, the first motion mechanism can be arranged adjacent to the middle of the back surface BS and the base 8, and the at least one first motion mechanism actuator correspondingly only includes one first motion mechanism actuator, so as to actuate the first member of the middle motion mechanism to be scalable relative to the second member. A single actuator is adopted to achieve dual dimensional synchronous scalable and rotational motion of the bracket 100, that is, by controlling a single scalable actuator, the bracket can rotate while descending, with low cost.

When the at least one first motion mechanism only includes three first motion mechanisms, the middle motion mechanism is arranged adjacent to the middle of the back surface BS and the base 8. Two side motion mechanisms are respectively arranged on both sides of the middle motion mechanism opposite to each other, such as the edge of the back surface BS and the base 8. Moreover, the first member of each of the two side motion mechanisms is configured to be slidable along the second member thereof. Furthermore, the at least one first motion mechanism actuator can be configured to include only one first motion mechanism actuator, so as to actuate the first member of the middle motion mechanism of the three first motion mechanisms to be scalable relative to the second member (i.e., the middle motion mechanism is an active motion mechanism or a driving motion mechanism). Moreover, the first member of each of the two side motion mechanisms is configured to be slidable longitudinally along its second member (i.e., the two side motion mechanisms are slave motion mechanisms or driven motion mechanisms). In short, with a middle active mechanism, two side driven mechanisms, and an actuator located in the middle, the beneficial effect of this actuation mode is that the bracket 100 moves more smoothly, and its support is more stable and robust, which cannot cause the working panel 3 to tilt. Optionally, the at least one first motion mechanism actuator can also be configured to include only two first motion mechanism actuators to respectively actuate the first members of the two side motion mechanisms to be scalable relative to the second members (i.e., the two side motion mechanisms are active motion mechanisms or driving motion mechanisms). Moreover, the first member of the middle motion mechanism is configured to slide longitudinally along the second member (i.e., the first motion mechanism is a slave motion mechanism or a driven motion mechanism). In short, with one middle active mechanism, two side driven mechanisms, and one actuator located in the middle, the beneficial effect of this actuation mode is that the bracket 100 moves more smoothly, and its support is more stable and robust, which cannot cause the working panel 3 to tilt. The travel of the three motion mechanisms is the same, denoted as S, and the motion trajectory is the same. The function of the driven mechanisms on both sides is to ensure the stability of its working panel 3, and not to cause oscillation on both sides due to the active force in the middle.

When the at least one first motion mechanism includes two first motion mechanisms, the two first motion mechanisms are arranged at the edges of the back surface BS and the base 8 opposite to each other, and the at least one first motion mechanism actuator includes two first motion mechanism actuators so as to respectively actuate the first members of the two first motion mechanisms to be scalable relative to the second members.

The bracket 100 may further comprise a rear cover 7 covering the at least one first motion mechanism actuator and at least a part of the at least one first motion mechanism M1, M2. The rear cover 7 wraps at least partially around the mechanical structure of the bracket 100 from the rear (especially the actuator and the side and middle motion mechanisms M1, M2), and is locked onto the fixed frame 4 to prevent dust and make the bracket 100 aesthetically pleasing and tidy as a whole.

The application scenarios of the bracket 100 according to the present disclosure are shown in Figs. 3-5 and Figs. 10A-10C. The object to be supported OB needs to be hanged vertically in a meeting state. When the actions such as writing, drawing act on the object to be supported OB, the objected to be supported OB can be tilted to a certain angle and pulled down to achieve a better writing experience.

The bracket 100 provided according to some exemplary embodiments of the present application includes the following beneficial effects: since the bracket 100 comprises at least one first motion mechanism M1, M2 hinged on the back surface BS, and a second motion mechanism (e.g., the connecting rod 5) located below the at least first motion mechanism M1, M2, wherein each of the at least one first motion mechanism M1, M2 comprises a first member M11, M21 and a second member M12, M22, the first member M11, M21 is configured to be scalable relative to the second member M12, M22, the second member M12, M22 is fixedly connected to the base 8; the first end B of the connecting rod 5 can be movably connected to the lower part of the working panel 3, the second end A of the connecting rod 5 can be movably connected to the base 8, the bracket can be synchronously retracted and rotated, resulting in high control efficiency and good user experience. The bracket synchronously flips while extending and retracting, achieving rapid switching and stepless adjustment between the vertical placement of the object to be supported (such as conference whiteboards) in conference state and handwriting scenes with a certain angle.

It should be noted that in the exemplary embodiments of the present application, a conference whiteboard or display is used as an example of the object to be supported. However, it should be understood that the bracket of the present disclosure can also be applied to other types of objects to be supported.

It should be understood that although some exemplary embodiments of the present disclosure have been described and illustrated herein, those ordinary skilled in the art will easily come up with various other devices and/or structures for performing the functions described herein and/or obtaining the results and/or one or more advantages described herein, and each of these changes and/or modifications is considered within the scope of the embodiments of the present disclosure. More generally, those skilled in the art will easily understand that all parameters, dimensions, materials, and configurations described herein are meant to be exemplary, and the actual parameters, dimensions, materials, and/or configurations will depend on one or more specific applications using the teachings of the present disclosure. Those skilled in the art will recognize or be able to use no more than conventional experiments to identify many equivalents of the specific embodiments described herein. Therefore, it should be understood that the aforementioned embodiments are presented only through examples, and within the scope of the attached claims, the embodiments can be implemented in a way different from the specifically described and claimed way. The embodiments of the present disclosure are specific to each individual feature, system, item, material, kit, and/or method described herein. Furthermore, if such features, systems, items, materials, kits, and/or methods are not inconsistent with each other, any combination of two or more such features, systems, items, materials, kits, and/or methods is included within the scope of the present disclosure.

Unless otherwise limited, all technical and scientific terms used in the present disclosure have the same meaning as those commonly understood by those skilled in the art to which the present disclosure belongs.

The phrase "and/or" used in the specification and claims of this article should be understood as referring to "any one or two" of such combined elements, that is, elements that are combined in some cases and not combined in other cases. The several elements listed with "and/or" should be explained in the same way, that is, "one or more" of such combined elements. In addition to the elements specifically identified by the "and/or" clause, other elements can optionally exist, no matter related or unrelated to those specifically identified. Therefore, as a non-restrictive example, when used in conjunction with open language such as "including", the reference to "A and/or B" may refer only to A (optionally including elements other than B) in one embodiment; in another embodiment, only referring to B (optionally including elements other than A); in a further embodiment, referring to both A and B (optionally including other elements), etc.

Those skilled in the art will understand the term "basically" in this article (such as in "basically all light" or in "basically composed of..."). The term "basically" can also include embodiments with "completely", "wholly", "all", etc. Therefore, in embodiments, adjectives are basically removable. Where applicable, the term "basically" can also refer to 90% or higher, such as 95% or higher, particularly 99% or higher, or even more particularly 99.5% or higher, including 100%. The term "including" also includes embodiments where the term "including" means "consisting of". The term "and/or" particularly refers to one or more of the items mentioned before and after "and/or". For example, the phrase "item 1 and/or item 2" and similar phrases can involve one or more of item 1 and item 2. The term "including" may refer to "consisting of" in one embodiment, but it may also refer to "comprising at least a defined category and optionally one or more other categories" in another embodiment.

In addition, the terms first, second, and third in this specification and the claims are used to distinguish similar elements and do not indicate any order, quantity, or importance. It should be understood that the terms used in this way are interchangeable in appropriate cases, and the embodiments of the present disclosure described herein can be operated in a different order than those described or shown herein.

It should be noted that the aforementioned embodiments illustrate rather than limit the present disclosure, and those skilled in the art will be able to design many alternative embodiments without departing from the scope of the attached claims. Any reference signs placed between parentheses in the claims shall not be construed as limiting the claims. The use of the verb "including" and its inflection does not exclude the existence of elements or steps that differ from those stated in the claims. The wording "one" or "one" in the Claims of the present disclosure does not exclude the plural, and is only intended for convenience of description and should not be understood as limiting the scope of protection of the present disclosure.

In the device claims that enumerate several devices, several of these devices can be represented by the same hardware item. The mere fact that certain measures are described in different dependent claims does not indicate that a combination of these measures cannot be advantageously used.

The various aspects discussed in the present disclosure can be combined to provide additional advantages. **In** addition, those skilled in the art will understand that embodiments can be combined, and that more than two embodiments can also be combined.

## Claims

1. A bracket (100), comprising:
a base (8);
a working panel (3) supported by the base (8), the working panel (3) being configured to be suitable for supporting an object to be supported;
at least one first motion mechanism (M1, M2) being connected between the working panel (3) and the base (8) and comprising a first member (M11, M21) connected to the working panel (3), the first member (M11, M21) being configured to be movable in a first direction;
at least one second motion mechanism comprising a first end (B) connected to the working panel (3) and a second end (A) connected to the base (8), the second motion mechanism being configured to enable the first end (B) to perform relative motion relative to the second end (A) the relative motion comprising motion in a second direction different from the first direction,
wherein the first member (M11, M21) comprises a first end connected to the upper end of the working panel (3), the first (B) end of the second motion mechanism being below the first end of the first member (M11);
wherein the second motion mechanism comprises a telescopic mechanism or wherein the second motion mechanism comprises a connecting rod (5), said connecting rod (5) being in a curved shape, which protrudes in a direction away from the working panel (3);
wherein the first motion mechanism (M1, M2) further comprises a second member (M12, M22) fixedly connected to the base (8), said first member (M11, M21) being configured to be telescopic relative to the second member (M12, M22);
wherein the first end of the second motion mechanism is pivotably connected to the lower end of the working panel (3), and the second end of the second motion mechanism is hinged to the base (8);
wherein the bracket (100) is configured such that: during the process of the first member (M11, M21) extending from the second member (M12, M22), the working panel (3) moves upwards, so that the first end of the second motion mechanism pivots around the second end of the second motion mechanism towards the second member (M12, M22).

2. The bracket (100) according to claim 1, wherein the second motion mechanism is configured so that the first end (B) is movably connected to the working panel (3) and the second end (A) is movably connected to the base (8).

3. The bracket (100) as claimed in claim 1, wherein the working panel (3) comprises a front surface (FS) and a back surface (BS), the front surface (FS) is configured to be suitable for arranging an object to be supported, the first end of the first member (M11, M21) is hinged with the back surface, the second end of the first member (M11, M21) is retractably engaged with the second member (M12, M22), the first end of the second member (M12, M22) is retractably engaged with the first member (M11, M21), and the second end of the second member (M12, M22) is fixed to the base (8).

4. The bracket (100) as claimed in claim 1, configured such that: during the process of the first member (M11, M21) retracting back to the second member (M12, M22), the working panel (3) moves downwards, and the first end of the second motion mechanism pivots around the second end of the second motion mechanism in a direction away from the second member (M12, M22).

5. The bracket (100) as claimed in claim 1, further comprising at least one first motion mechanism (M1, M2) actuator configured to actuate the first member (M11, M21) of the at least one first motion mechanism (M1, M2) to be telescopic relative to the second member (M12, M22).

6. The bracket (100) as claimed in claim 5, wherein the at least one first motion mechanism (M1, M2) comprises a middle motion mechanism (M2) which is arranged adjacent to the middle of the back surface (BS) and the base (8), and the at least one first motion mechanism actuator comprises a middle motion mechanism actuator to actuate the first member (M11, M21) of the middle motion mechanism (M2) to be telescopic relative to the second member (M12, M22).

7. The bracket (100) as claimed in claim 6, wherein the at least one first motion mechanism (M1, M2) further comprises two side motion mechanisms (M1) which are respectively arranged on both sides of the middle motion mechanism (M2) opposite to each other, the first member (M11, M21) of each of the two side motion mechanisms (M1) is configured to be slidable along a second member (M12, M22) thereof.

8. The bracket (100) as claimed in claims 1, wherein a scaling direction of the at least one first motion mechanism (M1, M2) is a vertical direction, a motion of the working panel (3) is a composite motion of the following two motions: motion along the vertical direction; and rotation around a hinge position (C).

## Patentansprüche

1. Halterung (100), umfassend:
- einen Boden (8);
eine Arbeitsplatte (3), die von der Basis (8) getragen wird, wobei die Arbeitsplatte (3) ausgelegt ist, um für das Stützen eines zu stützenden Gegenstands geeignet zu sein; mindestens einen ersten Bewegungsmechanismus (M1, M2), der zwischen die Arbeitsplatte (3) und der Basis (8) verbunden ist und ein erstes Element (M11, M21) umfasst, das mit der Arbeitsplatte (3) verbunden ist, wobei das erste Element (M11, M21) ausgelegt ist, um in eine erste Richtung bewegbar zu sein;
mindestens einen zweiten Bewegungsmechanismus, der ein erstes Ende (B) umfasst, das mit der Arbeitsplatte (3) verbunden ist, und ein zweites Ende (A), das mit der Basis (8) verbunden ist, wobei der zweite Bewegungsmechanismus ausgelegt ist, um dem ersten Ende (B) zu ermöglichen, eine relative Bewegung relativ zum zweiten Ende (A) durchzuführen, wobei die relative Bewegung eine Bewegung in eine zweite Richtung umfasst, die sich von der ersten Richtung unterscheidet,
wobei das erste Element (M11, M21) ein erstes Ende umfasst, das mit dem oberen Ende der Arbeitsplatte (3) verbunden ist, wobei sich das erste (B) Ende des zweiten Bewegungsmechanismus unterhalb des ersten Endes des ersten Elements (M11) befindet,
wobei der zweite Bewegungsmechanismus einen Teleskopmechanismus umfasst, oder
wobei der zweite Bewegungsmechanismus eine Verbindungsstange (5) umfasst, wobei die Verbindungsstange (5) eine gekrümmte Form aufweist, die in einer Richtung wegführend von der Arbeitsplatte (3) hervorsteht,
wobei der erste Bewegungsmechanismus (M1, M2) ferner ein zweites Element (M12, M22) umfasst, das fest mit der Basis (8) verbunden ist, wobei das erste Element (M11, M21) ausgelegt ist, um relativ zum zweiten Element (M12, M22) teleskopisch zu sein, wobei das erste Ende des zweiten Bewegungsmechanismus schwenkbar mit dem unteren Ende der Arbeitsplatte (3) verbunden ist und das zweite Ende des zweiten Bewegungsmechanismus ist an der Basis (8) angelenkt ist,
wobei die Halterung (100) derart ausgelegt ist, dass sich die Arbeitsplatte (3) während des Prozesses, bei dem sich das erste Element (M11, M21) von dem zweiten Element (M12, M22) erstreckt, nach oben bewegt, sodass das erste Ende des zweiten Bewegungsmechanismus um das zweite Ende des zweiten Bewegungsmechanismus in Richtung des zweiten Elements (M12, M22) verschwenkt wird.

2. Halterung (100) nach Anspruch 1, wobei der zweite Bewegungsmechanismus derart ausgelegt ist, dass das erste Ende (B) bewegbar mit der Arbeitsplatte (3) verbunden ist und das zweite Ende (A) bewegbar mit der Basis (8) verbunden ist.

3. Halterung (100) nach Anspruch 1, wobei die Arbeitsplatte (3) eine vordere Oberfläche (FS) und eine hintere Oberfläche (BS) umfasst, die vordere Oberfläche (FS) ausgelegt ist, um zum Anordnen eines zu stützenden Gegenstands geeignet zu sein, das erste Ende des ersten Elements (M11, M21) gelenkig mit der hinteren Oberfläche verbunden ist, das zweite Ende des ersten Elements (M11, M21) mit dem zweiten Element (M12, M22) zurückziehbar in Eingriff steht, das erste Ende des zweiten Elements (M12, M22) zurückziehbar mit dem ersten Element (M11, M21) in Eingriff steht und das zweite Ende des zweiten Elements (M12, M22) an der Basis (8) befestigt ist.

4. Halterung (100) nach Anspruch 1, die derart ausgelegt ist, dass sich die Arbeitsplatte (3) während des Prozesses, bei dem sich das erste Element (M11, M21) zum zweiten Element (M12, M22) zurückzieht, nach unten bewegt und das erste Ende des zweiten Bewegungsmechanismus um das zweite Ende des zweiten Bewegungsmechanismus in eine Richtung wegführend vom zweiten Element (M12, M22) verschwenkt wird.

5. Halterung (100) nach Anspruch 1, ferner umfassend mindestens eine Betätigungsvorrichtung des ersten Bewegungsmechanismus (M1, M2), die ausgelegt ist, um das erste Element (M11, M21) des mindestens einen ersten Bewegungsmechanismus (M1, M2) so zu betätigen, dass es relativ zum zweiten Element (M12, M22) teleskopisch ist.

6. Halterung (100) nach Anspruch 5, wobei der mindestens eine erste Bewegungsmechanismus (M1, M2) einen mittleren Bewegungsmechanismus (M2) umfasst, der benachbart zur Mitte der hinteren Oberfläche (BS) und der Basis (8) angeordnet ist, und die mindestens eine Betätigungsvorrichtung des ersten Bewegungsmechanismus eine mittlere Betätigungsvorrichtung des Bewegungsmechanismus umfasst, um das erste Element (M11, M21) des mittleren Bewegungsmechanismus (M2) zu betätigen, um relativ zum zweiten Element (M12, M22) teleskopisch zu sein.

7. Halterung (100) nach Anspruch 6, wobei der mindestens eine erste Bewegungsmechanismus (M1, M2) ferner zwei seitliche Bewegungsmechanismen (M1) umfasst, die jeweils auf beiden Seiten des mittleren Bewegungsmechanismus (M2) einander gegenüberliegend angeordnet sind, wobei das erste Element (M11, M21) jedes der beiden seitlichen Bewegungsmechanismen (M1) ausgelegt ist, um entlang eines zweiten Elements (M12, M22) davon verschiebbar zu sein.

8. Halterung (100) nach Anspruch 1, wobei eine Skalierungsrichtung des mindestens einen ersten Bewegungsmechanismus (M1, M2) eine vertikale Richtung ist und eine Bewegung der Arbeitsplatte (3) eine zusammengesetzte Bewegung der folgenden zwei Bewegungen ist: Bewegung entlang der vertikalen Richtung und Drehung um eine Gelenkposition (C).

## Revendications

1. Support (100) comprenant :
- une base (8) ;
un panneau de travail (3) supporté par la base (8), le panneau de travail (3) étant configuré pour être adapté au support d'un objet à supporter ;
au moins un premier mécanisme de mouvement (M1, M2) étant relié entre le panneau de travail (3) et la base (8) et comprenant un premier élément (M11, M21) relié au panneau de travail (3), le premier élément (M11, M21) étant configuré pour être mobile dans une première direction ;
au moins un second mécanisme de mouvement comprenant une première extrémité (B) reliée au panneau de travail (3) et une seconde extrémité (A) reliée à la base (8), le second mécanisme de mouvement étant configuré pour permettre à la première extrémité (B) d'effectuer un mouvement relatif par rapport à la seconde extrémité (A), le mouvement relatif comprenant un mouvement dans une seconde direction différente de la première direction,
le premier élément (M11, M21) comprenant une première extrémité reliée à l'extrémité supérieure du panneau de travail (3), la première extrémité (B) du second mécanisme de mouvement étant en dessous de la première extrémité du premier élément (M11) ;
le second mécanisme de mouvement comprenant un mécanisme télescopique ou
le second mécanisme de mouvement comprenant une tige de raccordement (5), ladite tige de raccordement (5) étant de forme incurvée et faisant saillie dans une direction opposée au panneau de travail (3) ;
le premier mécanisme de mouvement (M1, M2) comprenant en outre un second élément (M12, M22) relié de manière fixe à la base (8), ledit premier élément (M11, M21) étant configuré pour être télescopique par rapport au second élément (M12, M22) ; la première extrémité du second mécanisme de mouvement étant reliée de manière pivotante
à l'extrémité inférieure du panneau de travail (3), et la seconde extrémité du second mécanisme de mouvement étant articulée à la base (8) ;
le support (100) étant configuré de telle sorte que : pendant le processus d'extension du premier élément (M11, M21) à partir du second élément (M12, M22), le panneau de travail (3) se déplace vers le haut, de sorte que la première extrémité du second mécanisme de mouvement pivote autour de la seconde extrémité du second mécanisme de mouvement en direction du second élément (M12, M22).

2. Support (100) selon la revendication 1, le second mécanisme de mouvement étant configuré de telle sorte que la première extrémité (B) est reliée de manière mobile au panneau de travail (3) et la seconde extrémité (A) est reliée de manière mobile à la base (8).

3. Support (100) selon la revendication 1, le panneau de travail (3) comprenant une surface avant (FS) et une surface arrière (BS), la surface avant (FS) étant configurée pour être adaptée à la disposition d'un objet à supporter, la première extrémité du premier élément (M11, M21) étant articulée avec la surface arrière, la seconde extrémité du premier élément (M11, M21) étant mise en prise de manière rétractable avec le second élément (M12, M22), la première extrémité du second élément (M12, M22) étant mise en prise de manière rétractable avec le premier élément (M11, M21), et la seconde extrémité du second élément (M12, M22) étant fixée à la base (8).

4. Support (100) selon la revendication 1, configuré de telle sorte que : pendant le processus de rétraction du premier élément (M11, M21) vers le second élément (M12, M22), le panneau de travail (3) se déplace vers le bas, et la première extrémité du second mécanisme de mouvement pivote autour de la seconde extrémité du second mécanisme de mouvement dans une direction opposée au second élément (M12, M22).

5. Support (100) selon la revendication 1, comprenant en outre au moins un premier actionneur de mécanisme de mouvement (M1, M2) configuré pour actionner le premier élément (M11, M21) de l'au moins un premier mécanisme de mouvement (M1, M2) de manière à ce qu'il soit télescopique par rapport au deuxième élément (M12, M22).

6. Support (100) selon la revendication 5, l'au moins un premier mécanisme de mouvement (M1, M2) comprenant un mécanisme de mouvement central (M2) étant disposé de manière adjacente au milieu de la surface arrière (BS) et de la base (8), et l'au moins un actionneur de premier mécanisme de mouvement comprenant un actionneur de mécanisme de mouvement central pour actionner le premier élément (M1 1, M21) du mécanisme de mouvement central (M2) de manière à ce qu'il soit télescopique par rapport au second élément (M12, M22).

7. Support (100) selon la revendication 6, l'au moins un premier mécanisme de mouvement (M1, M2) comprenant en outre deux mécanismes de mouvement latéraux (M1) étant respectivement disposés de part et d'autre du mécanisme de mouvement central (M2) à l'opposé l'un de l'autre, le premier élément (M11, M21) de chacun des deux mécanismes de mouvement latéraux (M1) étant configuré pour pouvoir coulisser le long d'un second élément (M12, M22) de ce dernier.

8. Support (100) selon la revendication 1, une direction de mise à l'échelle de l'au moins un premier mécanisme de mouvement (M1, M2) étant une direction verticale, un mouvement du panneau de travail (3) étant un mouvement composite des deux mouvements suivants : mouvement le long de la direction verticale ; et rotation autour d'une position de charnière (C).
